# EUROPÄISCHE PATENTSCHRIFT

(11) **EP 0 366 892 B1**
(45) Veröffentlichungstag und Bekanntmachung des Hinweises auf die Patenterteilung: **12.01.1994**
(21) Anmeldenummer: 89115669.7
(22) Anmeldetag: 25.08.1989
(51) Int. Cl.: H02P 6/02, H02M 7/538

(54) **Schaltungsanordnung zur Ansteuerung eines bürstenlosen Gleichstrommotors**
DC brushless motor control circuit arrangement
Circuit de commande pour un moteur à courant continu sans balais

(30) Priorität: 29.10.1988 DE 3836950
(43) Veröffentlichungstag der Anmeldung: 09.05.1990
(73) Patentinhaber: Frankl & Kirchner GmbH. & Co. KG Fabrik für Elektromotoren und elektrische Apparate, D-68723 Schwetzingen (DE)
(72) Erfinder: Rohr, Gustav, Dr.-Ing., D-6907 Nussloch (DE); Nohl, Gerd, Dipl.-Phys., D-6914 Rauenberg (DE); Böhm, Rainer, D-6900 Heidelberg (DE); Sinn, Wolfgang, D-6914 Rauenberg (DE)
(74) Vertreter: Schneck, Herbert, Dipl.-Phys., Dr.

(56) Entgegenhaltungen:
- BE-A- 666 376
- DE-A- 2 847 802
- TECHNISCHE RUNDSCHAU, Band 80, Nr. 34, 19. August 1988, Seiten 66-70, Bern, CH; J. PALAND et al.: "Neue abschaltbare Leistungshalbleiter"
- ELECTRONICS, Band 61, Nr. 1, 7. Januar 1988, Seiten 145-147+150, New York, NY, US; J. BASSETT: "Switching supplies: changing with the times"

## Beschreibung

Die Erfindung betrifft eine Schaltungsanordnung mit einer Mikroprozessorsteuerung zur Ansteuerung eines bürstenlosen Gleichstrommotors mit einer dreisträngigen Wicklung, insbesondere zum Antrieb von Industrienähmaschinen gemäß dem Oberbegriff von Anspruch 1.

Bürstenlose Gleichstrommotoren, welche früher üblicherweise lediglich für Antriebe geringerer Leistung und für relativ wenige Lastwechsel erforderlich machende Anwendungen eingesetzt wurden, haben sich in jüngster Zeit aufgrund der möglich gewordenen schnellen elektronischen Ansteuerung auch als Antriebe hoher Leistung mit relativ häufigen Lastwechseln, wie diese z.B. insbesondere bei Industrienähmaschinen auftreten, bewährt. Ein derartiger Gleichstrommotor wird beispielsweise in der EP 81 684 A1 beschrieben.

Herkömmlicherweise wird bei derartigen Gleichstrommotoren eine Trennung zwischen Steuerungsteil und Hochspannungsteil über Optokoppler realisiert. Die Übertragung des Ansteuersignals erfolgt auf einem gesonderten Weg direkt auf die Schalttransistoren der Endstufen. Dies ist schaltungstechnisch relativ aufwendig und macht das Vorsehen gesonderter Sicherheitsüberwachungsschaltungen für den Überlastfall erforderlich, da ein automatisches Sperren der Endstufen über die vorgesehene Mikroprozessorsteuerung softwaremäßig zuverlässig nicht möglich ist.

Aus der DE 28 47 802 A1 ist an sich bereits eine Ansteuerschaltung für bürstenlose Gleichstrommotoren mit einer Trennung zwischen Steuerteil und Hochspannungsteil über Übertrager bekannt. Bei dieser Schaltung wird jede Motorwicklung über eine Halbbrücke mit zwei Transistoren angesteuert. Zur galvanischen Trennung der Hochspannungsseite von der Steuerseite sind jedem der beiden Transistoren der Halbbrücke jeweils zwei Übertrager zugeordnet. Über zwei dritte Übertrager werden zwei negative Hilfsspannungen erzeugt, mit denen die Schalttransistoren der Halbbrücke gesperrt werden.

Hiervon ausgehend liegt der Erfindung die Aufgabe zugrunde, eine gattungsgemäße Schaltungsanordnung so auszugestalten, daß bei hoher Betriebssicherheit eine zuverlässige Übertragung der Steuerinformation einerseits und eine galvanische Abtrennung des Leistungsteils andererseits erreichbar sind, wobei insbesondere eine sichere Verriegelung im Sperrzustand erzielbar sein soll.

Diese Aufgabe wird erfindungsgemäß gelöst, gemaß dem kennzeichnenden Teil von Anspruch 1.

Es ergibt sich hierdurch ein weitgehend symmetrischer Schaltungsaufbau, wobei über die beiden Sekundärwicklungen des dritten Übertragers die Schaltungszweige, welche den beiden ersten Übertragern nachgeordnet sind und zur Ansteuerung der beiden Schalttransistoren einer Halbbrücke dienen, angesteuert werden. Es wird hierdurch eine absolut zuverlässige Verriegelung im Sperrzustand erreicht.

Vorteilhafterweise werden in den Halbbrücken als Schalttransistoren Feldeffekttransistoren bzw. sogenannte Installed Gate Transistoren verwendet.

Derartige Transistoren haben den Vorteil, nahezu leistungslos und mit großer Schnelligkeit hohe Ströme schalten zu können, so daß sich hohe Schaltfrequenzen bei einfacher Ansteuerbarkeit realisieren lassen.

Die Taktung erfolgt vorzugsweise mit einer Frequenz in der Größenordnung von 1 MHz. Durch eine derartige relativ hohe Frequenz ausgehend von einem Bereich von ca. 500 KHz wird erreicht, daß sich keine hörbaren Geräusche ergeben.

Weitere Merkmale, Vorteile und Einzelheiten der Erfindung ergeben sich aus der folgenden Beschreibung eines bevorzugten Ausführungsbeispiels anhand der Zeichnung. Dabei zeigen:
- Fig. 1: eine blockschaltbildartige Darstellung der wesentlichensten Baugruppen einer erfindungsgemäßen Schaltungsanordnung
- Fig. 2: ein vereinfachtes Schaltbild eines Ansteuermoduls für eine Halbbrücke und
- Fig. 3: den schematischen Spannungsverlauf am Ausgang des Ansteuermoduls, welcher einem Transistor der Halbbrücke zugeordnet ist.

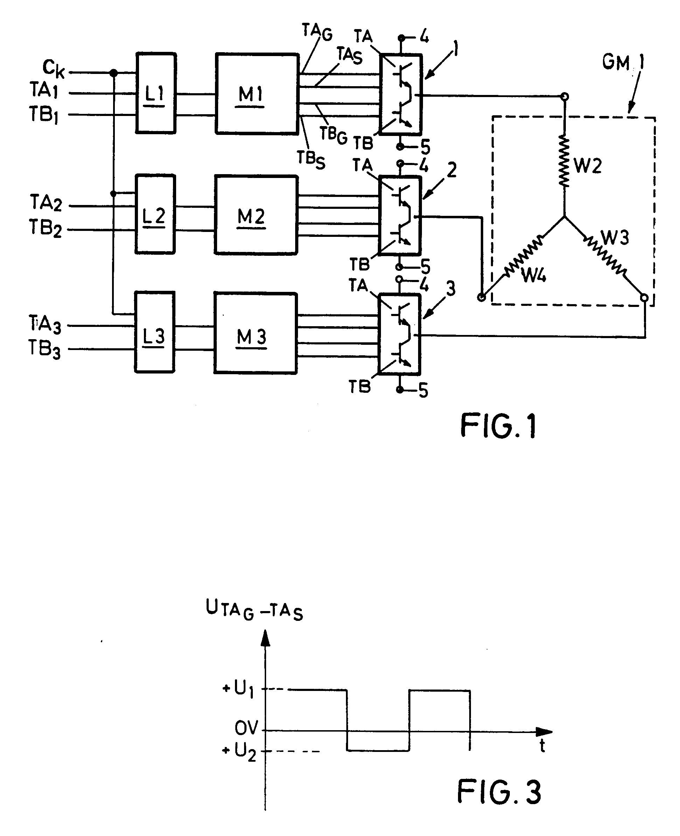

In Fig. 1 ist schematisch ein bürstenloser Gleichstrommotor GM 1 eingezeichnet, der dreisträngig ausgebildet ist, d. h. er weist drei Wicklungen W 2, W 3 und W 4 auf. Diese Wicklungen W 2, W 3, W 4 werden alternierend zur Erzielung einer an sich bekannten 30°-Kommutierung bzw. 60°-Kommutierung über Halbbrücken 1 bzw. 2 bzw. 3 eingeschaltet, indem diese Halbbrücken 1, 2, 3 eine an deren Eingängen 4 bzw. 5 anliegende hohe Gleichspannung auf die Wicklungen W 2 bzw. W 3 bzw. W 4 durchschalten. Jenachdem fließt dann Strom jeweils durch die Wicklungen W 2 und W 3 bzw. W 2 und W 4 bzw. W 3 und W 4 (60°-Kommutierung) oder zur Erzielung einer besseren Momentenausnutzung mit geringerer Momentenwelligkeit über die Wicklungen W 2-W 3-W 4 bzw. W 3-W 2-W 4 bzw. W 4-W 2-W 3 (30°-Kommutierung).

Jede Halbbrücke umfaßt zwei Schalttransistoren TA bzw. TB.

Zur Ansteuerung der Halbbrücken 1, 2, 3 dienen Steuermodule M 1, M 2, M 3, welchen jeweils eine Logikschaltung L 1, L 2 bzw. L 3 vorgeordnet ist.

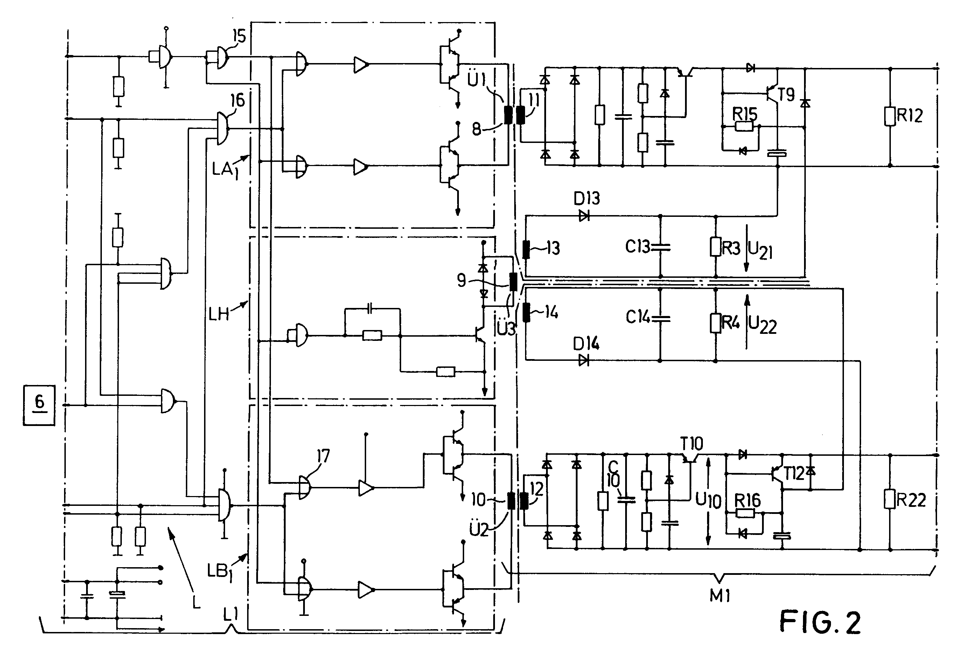

Die Logikschaltungen L 1, L 2, L 3 weisen jeweils Eingänge TA₁, TB₁ bzw. TA₂, TB₂ bzw. TA₃, TB₃ sowie je einen Eingang für das Taktsignal Cₖ auf. Weitere Eingänge, wie der Logikeingang von dem lediglich in Figur 2 eingezeichneten Mikroprozessor 6, der Enable-Eingang zum schnellen Abschalten der Endstufen und die Eingänge für die 15 Volt Spannungsversorgung sind der Einfachheit halber nicht eingezeichnet.

In Figur 2 ist eines der Ansteuermodule mit Logikschaltung, beispielsweise das Modul M 1 mit der Logikschaltung L 1 dargestellt.

Die Logikschaltung L 1 umfaßt eine Eingangslogik L sowie eine der Ansteuerung eines ersten Übertragers Ü 1 dienende Logikanordnung LA₁, eine der Ansteuerung des zweiten Übertragers Ü 2 dienende Ansteuerlogik LB₁ sowie eine Logikanordnung LH zur Ansteuerung des dritten Übertragers Ü 3 zur Erzeugung der Hilfsspannungen.

Die Vorschaltlogik L und die Logikanordnungen LA₁, LB₁ und LH umfassen UND-Glieder, Verstärker und Schaltstufen, um in an sich bekannter Weise über den Mikroprozessor eine gewünschte Kommutierung zu realisieren, wie dies beispielsweise in der europäischen Patentanmeldung EP-OS 81 684 beschrieben ist. Der Einfachheit halber wird deshalb die detaillierte Ausgestaltung und Arbeitsweise dieser Schaltungsteile, welche als solche für die Erfindung nicht von Bedeutung ist, nicht näher beschrieben.

Durch die drei Übertrager Ü 1, Ü 2 und Ü 3 wird eine vollständige galvanische Trennung zwischen dem Steuerteil, im wesentlichen gebildet durch die Logikanordnung L 1 und dem Leistungsteil, im wesentlichen gebildet durch die Halbbrücken 1, 2 und 3 erreicht.

Die Ausgänge der Logikanordnungen LA₁, LB₁, LH sind jeweils mit den Primärwicklungen 8, 9, 10 der Übertrager Ü 1, Ü 2 und Ü 3 verbunden.

An die Sekundärwicklungen 11, 12 der Übertrager LA₁ und LB₁ schließen sich jeweils identisch aufgebaute Schaltungsanordnungen an, welche jeweils einen Ausgangswiderstand R 12 bzw. R 22 aufweisen, der parallel zu den Ausgängen TA_{G}, TA_{S} bzw. TB_{G}, TB_{S} liegt, welche zu den Halbbrücken 1, 2 und 3 führen.

Der Übertrager Ü 3 weist zwei Sekundärwicklungen 13 und 14 auf, so daß zwei Hilfsspannungen U₂₁ und U₂₂ erzeugt werden, indem über die Sekundärwicklungen 13 bzw. 14 die Kondensatoren C 13 bzw. C 14 über die Dioden D 13 bzw. D 14 aufgeladen werden. Die Spannungen U₂₁ bzw. U₂₂ fallen über den Widerständen R 3 bzw. R 4 ab.

Mit Hilfe dieser Hilfsspannungen U₂₁ bzw. U₂₂ werden den Sekundärwicklungen 11 bzw. 12 der Übertrager 8 bzw. 10 nachgeordnete Transistoren T 9 bzw. T 12 über Widerstände R 15 bzw. R 16 vorgespannt, so daß diese eine negative Spannung an die Ausgangswiderstände R 12 bzw. R 22 leiten, wobei über diese negativen Spannungen die Halbbrücke 1 gesperrt werden kann.

Soll nun z. B. der Brückenzweig TB angesteuert werden, so wird das Schaltsignal über den Eingang TB und eine durch die integrierten Schaltungen 15, 16 gebildete Verriegelungsschaltung in der Logikanordnung L an den Eingang der integrierten Schaltung 17 der Logikanordnung LB₁ gelegt. Das Clocksignal CK wird durchgeschaltet und über den hochfrequenten Übertrager Ü 2 mit Hilfe der Endstufe T 12 auf die Sekundärseite des Übertragers Ü 2 übertragen. Die Spannung an dem Kondensator C 10, welcher parallel zu dem Ausgangswiderstand R 22 liegt, wird innerhalb der ersten CK-Perioden aufgebaut und schaltet einen Transistor T 10 durch. Die entsprechende positive Spannung U₁₀ wird an den Transistor TB der Halbbrücke 1 über den Ausgang TB_{G} weitergeleitet.

## Patentansprüche

1. Schaltungsanordnung mit einer Mikroprozessorsteuerung zur Ansteuerung eines bürstenlosen Gleichstrommotors (GM1) mit einer dreisträngigen Wicklung (W2, W3, W4), insbesondere zum Antrieb von Industrie-Nähmaschinen, umfassend eine Treiberschaltung, über die eine angelegte Gleichspannung alternierend in Form einer sogenannten 30°-Kommutierung oder 60°-Kommutierung mittels je zwei Schalttransistoren (TA, TB) umfassenden Halbbrücken (1, 2, 3) an die Wicklungen (W2, W3, W4) gelegt wird, wobei die Hochspannungsseite der Schaltungsanordnung galvanisch von der Steuerseite getrennt ist, dadurch gekennzeichnet, daß jeder der drei Halbbrücken (1, 2, 3) ein Ansteuermodul (M 1, M 2, M 3) zugeordnet ist, daß jedes Ansteuermodul (M 1, M 2, M 3) zwei über Logikschaltungen (LA₁, LB₁) angesteuerte Übertrager (Ü 1, Ü 3) umfaßt, welchen jeweils einer der Schalttransistoren (TA bzw. TB) der Halbbrücken (1, 2, 3) nachgeordnet ist, das über einen dritten, durch eine gesonderte Logikschaltung (LH) angesteuerten Übertrager (Ü 3) mit zwei getrennten Sekundärwicklungen (13, 14) zwei negative Hilfsspannungen (U₂₁ und U ₂₂) erzeugt werden, und daß mittels dieser Hilfsspannungen die Schalttransistoren (TA bzw. TB) der jeweiligen Halbbrücke (1, 2, 3) gesperrt werden, wobei zum Sperren der Schalttransistoren (TA, TB) über die Sekundärwicklungen (13, 14) des dritten Übertragers (Ü 3) über Dioden (D 13 bzw. D 14) Kondensatoren (C 13 bzw. C 14) aufgeladen werden, wobei den beiden ersten Übertragern (Ü 1 bzw. Ü 2) nachgeordnete Transistoren (T 9 bzw. T 12) über Kondensatoren (C 13 bzw. C 14) nachgeordnete Widerstände (R 15 bzw. R 16) vorgespannt werden und diese negativen Spannungen an Widerstände (R 12 bzw. R 22) gelegt werden, welche parallel zu den Sekundärwicklungen 11 bzw. 12) der beiden ersten Übertrager (Ü 1 bzw. Ü 2) bzw. zu den Ausgängen (TA_{G}, TA_{S} bzw. TB_{G}, TB_{S}) für je einen Schalttransistor (TA bzw. TB) liegen.

2. Schaltungsanordnung nach Anspruch 1, dadurch gekennzeichnet, daß die Schalttransistoren (TA, TB) Feldeffekttransistoren bzw. Installed Gate Transistoren sind.

3. Schaltungsanordnung nach Anspruch 1, dadurch gekennzeichnet, daß zur Taktung eine Frequenz von größenordnungsmäßig 1 MHz verwendet wird.

## Claims

1. Microprocessor-controlled circuit for actuating a brushless direct-current motor (GM1) which has a triple-phase coil (W2, W3, W4), especially for driving industrial sewing machines, comprising a drive circuit for applying a direct voltage alternatingly to the coils (W2, W3, W4) in the form of a so-called 30° commutation or 60° commutation by means of half-bridges (1, 2, 3) each having two switching transistors, the high frequency side of the circuit being galvanically separated from the control side, characterized in that an actuating module (M1, M2, M3) is associated with each of the three half-bridges (1, 2, 3), in that each actuating module (M1, M2, M3) includes two transformers (Ü1, Ü2) actuated by the logic circuits (LA₁, LB₁) and downstream of each transformer there being disposed one of the switching transistors (TA and TB) of the half-bridges (1, 2, 3), respectively, and in that a -third transformer (Ü3) which is actuated by a separate logic circuit (LH) and has two separate secondary coils (13, 14) serves to generate two negative auxiliary voltages (U₂₁ and U₂₂) and in that the switching transistors (TA and TB) of the respective half-bridge (1, 2, 3) are blocked by means of these auxiliary voltages, whereby, for blocking the switching transistors (TA, TB) via the secondary coils (13, 14) of the third transformer (Ü3) capacitors (C13 and C14) are loaded via diodes (D13 and D14), whereby transistors (T9 and T12) disposed downstream of the first two transformers (Ü1 and Ü2) are biased via resistors (R15 and R16) downstream of capacitors (C13 and C14) and these negative voltages are applied to resistors (R12 and R22) which are parallel to the secondary coils (11 and 12) of the first two transformers (Ü1 and Ü2) and to the outputs (TA_{G}, TA_{S} and TB_{G}, TB_{S}) for one switching transistor (TA and TB), respectively.

2. Circuit in accordance with claim 1, characterized in that the switching transistors (TA, TB) are field-effect and installed-gate transistors.

3. Circuit in accordance with claim 1, characterized in that the clock signal has a frequency of the order of magnitude of 1 MHz.

## Revendications

1. Circuit comprenant un dispositif de commande à microprocesseur pour commander un moteur à courant continu (GM 1) sans balais à enroulement triphasé (W 2, W 3, W 4), en particulier pour entraîner des machines à coudre industrielles, comprenant un circuit excitateur au moyen duquel une tension continue appliquée est transmise en alternance aux enroulements (W 2, W 3, W 4) sous la forme d'une « commutation de 30° » ou d'une « commutation de 60° » au moyen de demi-ponts (1, 2, 3) comprenant chacun deux transistors de commutation (TA, TB), le côté haute tension du circuit étant séparé galvaniquement du côté commande, caractérisé en ce que, à chacun des trois demi-ponts (1, 2, 3), est associé un module de commande (M 1, M 2, M 3), en ce que chaque module de commande (M 1, M 2, M 3) comprend deux transformateurs (Ü 1, Ü 3) qui sont commandés par des circuits logiques (LA₁, LB₁) et en aval de chacun desquels est implanté l'un des transistors de commutation (TA et TB) des demi-ponts (1, 2, 3), en ce qu'un troisième transformateur (Ü 3) commandé par un circuit logique séparé (LH) et comprenant deux enroulements secondaires séparés (13, 14) produit deux tensions auxiliaires négatives (U₂₁ et U₂₂), et en ce que ces tensions auxiliaires servent à bloquer les transistors de commutation (TA et TB) de chaque demi-pont (1, 2, 3), des condensateurs (C 13 et C14) étant chargés par des diodes (D 13 et D 14) pour bloquer les transistors de commutation (TA, TB) à travers les enroulements secondaires (13, 14) du troisième transformateur (Ü 3), des transistors (T 9 et T 12) implantés en aval des deux premiers transformateurs (Ü 1 et Ü 2) étant polarisés par des résistances (R 15 et R 16) implantées en aval de condensateurs (C 13 et C 14), et ces tensions négatives étant appliquées à des résistances (R 12 et R 22) qui sont montées en parallèle aux enroulements secondaires (11 et 12) des deux premiers transformateurs (Ü 1 et Ü 2) ou aux sorties (TA_{G}, TA_{S} ou TB_{G}, TB_{S}) de chaque transistor de commutation (TA et TB).

2. Circuit selon la revendication 1, caractérisé en ce que les transistors de commutation (TA, TB) sont des transistors à effet de champ ou des transistors à grille installée.

3. Circuit selon la revendication 1, caractérisé en ce que la fréquence employée pour la synchronisation est de l'ordre de 1 MHz.
